# EUROPEAN PATENT APPLICATION

(11) **EP 4 831 909 A1**
(43) Date of publication of application: **28.10.2026**
(21) Application number: 24905403.2
(22) Date of filing: 10.05.2024
(51) Int. Cl.: G06T 5/40

(54) **ENHANCEMENT METHOD AND APPARATUS FOR INFRARED IMAGE, AND ELECTRONIC DEVICE AND STORAGE MEDIUM**

(30) Priority: 19.12.2023 CN 202311753374
(71) Applicant: Zhejiang Uniview Technologies Co., Ltd., Hangzhou, Zhejiang 310051 (CN)
(72) Inventor: WU, Po, Hangzhou, Zhejiang 310051 (CN)
(74) Representative: De Ros, Alberto
(86) International application number: PCT/CN2024/092238
(87) International publication number: WO 2025/129899

(57) **Abstract**

The present disclosure relates to the technical field of image processing. Provided are an enhancement method and apparatus for an infrared image, and an electronic device and a storage medium. The method comprises: acquiring a source grayscale histogram of an infrared image to be processed, and performing iterative segmentation on the source grayscale histogram on the basis of distribution characteristic information of the source grayscale histogram, so as to obtain a target sub-histogram set; performing probability density correction on each target grayscale sub-histogram in the target sub-histogram set, so as to obtain a weighted grayscale histogram; fusing the source grayscale histogram and the weighted grayscale histogram, so as to obtain a target grayscale histogram; and determining a grayscale mapping curve of the target grayscale histogram, and performing grayscale mapping on said infrared image on the basis of the grayscale mapping curve, so as to obtain a contrast-enhanced image for said infrared image.

## Description

### CROSS-REFERENCES TO RELATED APPLICATIONS

The present application claims priority to Chinese patent application No. 2023117533746, filed on December 19, 2023, entitled "Enhancement Method and Apparatus for Infrared Image, and Electronic Device and Storage Medium", which is hereby incorporated by reference in its entirety.

### FIELD

The present application relates to the field of image processing, and more particularly, to an enhancement method and apparatus for an infrared image, and an electronic device and a storage medium.

### BACKGROUND

A thermal infrared monitoring device, such as a thermal infrared camera, is a device capable of visualizing thermal radiation energy radiated by a measured object into natural world and is widely used in military, medical, industrial, and transportation fields. However, a grayscale dynamic range of the infrared image is small since the thermal radiation energy of the measured object is not high and the temperature difference range on the surface of a same object is small, resulting in low contrast and low visual discernibility. This problem can be solved by contrast enhancement in the infrared image visualization process. Therefore, contrast enhancement of the infrared image is of great significance for improving the quality of infrared images.

### BRIEF SUMMARY

According to the present application, there are provided an enhancement method and apparatus for an infrared image, an electronic device, and a storage medium to solve a problem of loss of information in the image caused by contrast enhancement in related art and improve contrast enhancement effect of infrared images.

According to the present application, there is provided an enhancement method for an infrared image, including:
acquiring a source grayscale histogram of an infrared image to be processed, and iteratively segmenting the source grayscale histogram based on distribution feature information of the source grayscale histogram to obtain a set of target sub-histograms;
performing probability density correction on each target sub-grayscale histogram among the set of target sub-histograms to obtain a weighted grayscale histogram;
fusing the source grayscale histogram and the weighted grayscale histogram to obtain a target grayscale histogram; and
determining a grayscale mapping curve of the target grayscale histogram, and performing grayscale mapping on the infrared image to be processed based on the grayscale mapping curve to obtain a contrast-enhanced image of the infrared image to be processed.

According to the present application, there is further provided an enhancement apparatus for an infrared image, including:
an acquiring module configured for acquiring a source grayscale histogram of an infrared image to be processed,
a segmenting module configured for iteratively segmenting the source grayscale histogram based on distribution feature information of the source grayscale histogram to obtain a set of target sub-histograms;
a correction module configured for performing probability density correction on each target sub-grayscale histogram among the set of target sub-histograms to obtain a weighted grayscale histogram;
a fusing module configured for fusing the source grayscale histogram and the weighted grayscale histogram to obtain a target grayscale histogram; and
a mapping module configured for determining a grayscale mapping curve of the target grayscale histogram, and performing grayscale mapping on the infrared image to be processed based on the grayscale mapping curve to obtain a contrast-enhanced image of the infrared image to be processed.

According to the present application, there is further provided an electronic device including a memory, a processor, and a computer program stored on the memory and executable on the processor, where the computer program, when executed by the processor, performs the enhancement method for the infrared image as described above.

According to the present application, there is further provided a computer-readable storage medium storing a computer program, where the computer program, when executed by a processor, performs the enhancement method for the infrared image as described above.

According to the present application, there is further provided a computer program product including a computer program, wherein the computer program, when executed by a processor, performs the enhancement method for the infrared image as described above.

In an enhancement method and apparatus for an infrared image, an electronic device, and a storage medium of the present application, the enhancement method includes acquiring a source grayscale histogram of an infrared image to be processed, and iteratively segmenting the source grayscale histogram based on distribution feature information of the source grayscale histogram to obtain a set of target sub-histograms; performing probability density correction on each target sub-grayscale histogram among the set of target sub-histograms to obtain a weighted grayscale histogram; fusing the source grayscale histogram and the weighted grayscale histogram to obtain a target grayscale histogram; and determining a grayscale mapping curve of the target grayscale histogram, and performing grayscale mapping on the infrared image to be processed based on the grayscale mapping curve to obtain a contrast-enhanced image of the infrared image to be processed, achieving contrast enhancement of the infrared image. Since the distribution feature information of the source grayscale histogram is utilized when the source grayscale histogram is segmented, that is, original grayscale distribution feature of the infrared image is considered during segmentation, a grayscale range within each segmented target sub-grayscale histogram can belong to the same type of object. Therefore, correction is performed using the segmented target sub-grayscale histograms as units, information loss in the infrared image can be effectively reduced and contrast enhancement effect of the infrared image is improved.

### BRIEF DESCRIPTION OF THE DRAWINGS

FIG. 1 is a schematic flowchart of an enhancement method for an infrared image according to an embodiment of the present application;
FIG. 2 is a schematic flowchart of iteratively segmenting a source grayscale histogram based on distribution feature information of the source grayscale histogram according to an embodiment of the present application;
FIG. 3 is a schematic diagram of segmentation effect of segmenting a source grayscale histogram using a mean as a segmentation point in the related art;
FIG. 4 is a schematic diagram of segmentation effect of segmenting a source grayscale histogram based on segmentation points determined based on mean, standard deviation, and skewness according to an embodiment of the present application;
FIG. 5 is a schematic structural diagram of an enhancement apparatus for an infrared image according to an embodiment of the present application; and
FIG. 6 is a schematic structural diagram of an electronic device according to an embodiment of the present application.

### DETAILED DESCRIPTION

Solutions of the present application are described below in conjunction with the accompanying drawings. Described embodiments are only a part of embodiments of the present application.

Contrast enhancement of an infrared image using a histogram equalization algorithm can adjust grayscale distribution of the infrared image to a uniform distribution and perform grayscale mapping based on the uniform distribution to achieve the purpose of contrast enhancement. Although a uniform distribution has the highest information entropy among all distributions and can bring the strongest contrast effect visually, original grayscale distribution is changed from a relatively concentrated grayscale range to a uniform distribution across the entire grayscale range, resulting in a loss of information in the image.

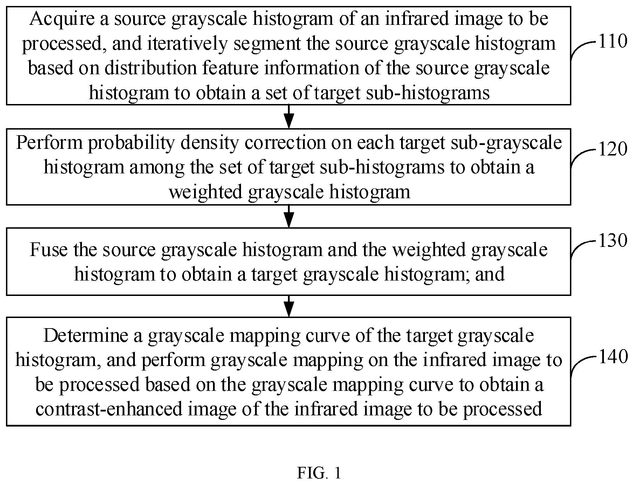

An enhancement method for an infrared image of the present application is described below in conjunction with FIG. 1 to FIG. 4. The enhancement method for the infrared image can be applied to electronic devices such as thermal infrared monitoring device, a terminal device, or a server. The terminal device and the server can communicate with the thermal infrared monitoring device. The terminal devices can include a mobile phone, a computer, a vehicle-mounted device, a tablet computer, a wearable device, etc.; and the server can include an independent server, a cluster server, or a cloud server, etc. The enhancement method for the infrared image can also be applied to an enhancement apparatus for an infrared image installed in an electronic device such as a thermal infrared monitoring device, the terminal device, or the server and the enhancement apparatus for the infrared image can be implemented through a software, a hardware, or a combination of a software, a hardware.

FIG. 1 exemplarily illustrates a schematic flowchart of an enhancement method for an infrared image according to an embodiment of the present application. As shown in FIG. 1, the enhancement method for the infrared image may include the following steps 110 to 140.

Step 110, acquiring a source grayscale histogram of an infrared image to be processed, and iteratively segmenting the source grayscale histogram based on distribution feature information of the source grayscale histogram to obtain a set of target sub-histograms.

Grayscale statistics is performed on the infrared image to be processed to obtain the source grayscale histogram of the infrared image to be processed. In an embodiment, grayscale statistics can be performed on the infrared image to be processed first, and grayscale filtering based on a grayscale threshold is then performed on a grayscale histogram obtained from the grayscale statistics, to obtain the source grayscale histogram of the infrared image to be processed. The grayscale threshold may be a preset grayscale threshold or adaptively determined based on the grayscale histogram obtained based on the grayscale statistics.

In an exemplary embodiment, acquiring the source grayscale histogram of the infrared image to be processed may include: performing grayscale statistics on the infrared image to be processed to obtain a first grayscale histogram; sorting statistical values of the first grayscale histogram in a descending order to obtain a second grayscale histogram, and determining a cumulative distribution of the second grayscale histogram; positioning a target grayscale value of which a first cumulative distribution proportion is greater than or equal to a preset proportion threshold in the cumulative distribution and determining a statistical value corresponding to the target grayscale value in the second grayscale histogram as a target grayscale threshold; and performing grayscale filtering on the second grayscale histogram based on the target grayscale threshold to obtain the source grayscale histogram.

For example, grayscale statistics may be performed on the infrared image to be processed to obtain a first grayscale histogram Hₛ = {hₛ(0), hₛ(1), ... , hₛ(i), ... , hₛ(L)} , where hₛ(i) represents a number of pixels corresponding to a grayscale value i, and L is a maximum grayscale value that can be represented in the grayscale histogram, assuming an image data bit depth is n bits, then L=2n-1.

Statistical values of the first grayscale histogram Hₛ are sorted in a descending order to obtain a second grayscale histogram DHₛ and cumulative distribution DFₛ(k) of the second grayscale histogram DHₛ may be determined using the following formula (1): ${DF}_{s} \left(k\right) = {\sum }_{i = 1}^{k} {DH}_{s} \left(i\right)$ (1) where k represents a grayscale index in the grayscale histogram.

For each cumulative distribution value in the cumulative distribution DFₛ(k), such as an i-th cumulative distribution value DFₛ(i) , a cumulative distribution proportion $\frac{{DF}_{s} \left(i\right)}{{DF}_{s} \left(L\right)}$ corresponding to the i-th cumulative distribution value DFₛ(i) may be determined. A grayscale index k_{τ}, that is, a target grayscale value, of which a first cumulative distribution proportion is greater than or equal to a preset proportion threshold Pₚᵣₑₛₑₜ may be positioned in the cumulative distribution DFₛ(k) based on each cumulative distribution proportion, and may be expressed as the following formula (2): ${k}_{τ} = arg {min}_{i} \left(\frac{{DF}_{s} \left(i\right)}{{DF}_{s} \left(L\right)}\geq {P}_{preset}\right)$ (2) where the preset proportion threshold Pₚᵣₑₛₑₜ can be an empirical value, such as 0.99.

Furthermore, a statistical value corresponding to the grayscale index k_{τ} may be determined as the target grayscale threshold τ of Hₛ and the target grayscale threshold τ can then be used as a threshold for filtering an effective grayscale level. τ can be represented by the following expression (3): $τ = {DH}_{s} \left({k}_{τ}\right)$ (3) after the target grayscale threshold τ is obtained, grayscale filtering is performed on the first grayscale histogram Hₛ using the following formula (4) based on the target grayscale threshold τ to obtain the source grayscale histogram Hᵥ = {hᵥ(0), hᵥ(1), ... , hᵥ(L)}. The formula (4) can be expressed as: ${h}_{v} \left(h\right) = \left\{\begin{matrix}0 , & {h}_{s} \left(k\right) \leq τ \\ {h}_{s} \left(k\right) , & {h}_{s} \left(k\right) > τ\end{matrix}\right.$ (4) where hₛ(k) represents the number of pixels corresponding to a grayscale value k in the first grayscale histogram Hₛ, and hᵥ(k) represents the number of pixels corresponding to a grayscale value k in the source grayscale histogram Hᵥ.

By further performing grayscale filtering on the first grayscale histogram obtained from performing grayscale statistics on the infrared image to be processed based on the target grayscale threshold, outliers can be filtered out to improve the accuracy of the grayscale histogram. Moreover, the target grayscale threshold can be adaptively calculated and determined based on the first grayscale histogram, without involving the setting of an initial grayscale threshold, improving the accuracy of the target grayscale threshold, exhibiting strong adaptability, and having a time complexity for adaptive grayscale filtering of only O(L·logL), resulting in high time efficiency.

In an exemplary embodiment, the infrared image to be processed may be preprocessed using at least one of non-uniformity correction, bad pixel correction, or stripe noise correction, to improve image quality.

For example, the distribution feature information may include mean of grayscales or may include mean, standard deviation and skewness of grayscales. After the source grayscale histogram is obtained, grayscale segmentation points of the source grayscale histogram can be determined using distribution feature information. The source grayscale histogram is iteratively segmented based on distribution feature information of the source grayscale histogram to obtain a set of target sub-histograms including segmented histogram segments. Since original distribution features of the source grayscale histogram are considered when the grayscale segmentation points are determined, a grayscale range within each segmented histogram segment can belong to the same type of object.

Step 120, performing probability density correction on each target sub-grayscale histogram among the set of target sub-histograms to obtain a weighted grayscale histogram.

In an exemplary embodiment, step 120 may include: determining, for each target sub-grayscale histogram among the set of target sub-histograms, a probability density sum of the target sub-grayscale histogram; weighting the target sub-grayscale histogram based on the probability density sum to obtain a weighted grayscale sub-histogram corresponding to the target sub-grayscale histogram; and determining each weighted grayscale sub-histogram as the weighted grayscale histogram.

For example, for each target sub-grayscale histogram, after the weighted grayscale sub-histogram corresponding to the target sub-grayscale histogram is obtained, the weighted grayscale sub-histogram may be normalized and each normalized weighted sub-grayscale histogram is then determined as the weighted grayscale histogram.

Weighting the target sub-grayscale histogram based on the probability density sum to obtain the weighted grayscale sub-histogram corresponding to the target sub-grayscale histogram may include: for each grayscale value in the target sub-grayscale histogram, determining a weighted probability density corresponding to the grayscale value based on the number of pixels of the grayscale value, a maximum probability density, a minimum probability density, and the probability density sum; and normalizing the weighted probability density corresponding to each grayscale value to obtain the weighted grayscale sub-histogram corresponding to the target sub-grayscale histogram.

For each grayscale value in the target sub-grayscale histogram, a first difference between the number of pixels of the grayscale value and the minimum probability density can be determined, a second difference between the maximum probability density and the minimum probability density can be determined; a ratio of the first difference to the second difference is obtained and the ratio is exponentially weighted using the probability density sum; and a product of the exponentially weighted result and the maximum probability density is determined as a weighted probability density corresponding to the grayscale value.

For example, for an i-th target sub-grayscale histogram Hᵢ, assuming a grayscale range of Hᵢ is [lₘᵢₙ, lₘₐₓ], a probability density sum βᵢ of Hᵢ can be expressed as the following formula (5): ${β}_{i} = {\sum }_{k = {l}_{min}}^{{l}_{max}} {h}_{v} \left(k\right)$ (5) where hᵥ(k) represents the number of pixels corresponding to a grayscale value k in the target sub-grayscale histogram Hᵢ.

For a grayscale k located in the target sub-grayscale histogram Hᵢ, weighted probability density h_{w}(k) corresponding to the grayscale value can be expressed as the following formula (6): ${h}_{w} \left(k\right) = {h}_{vmax} ⋅ {\left(\frac{{h}_{v} \left(k\right) - {h}_{vmin}}{{h}_{vmax} - {h}_{vmin}}\right)}^{{β}_{i}}$ (6) where hᵥₘᵢₙ represents the minimum probability density, hᵥₘₐₓ represents the maximum probability density, and hᵥ(k) represents the number of pixels corresponding to a grayscale value k in the target sub-grayscale histogram Hᵢ.

After the weighted probability density h_{w}(k) is obtained, h_{w}(k) can be normalized using the following formula (7): ${h}_{w} \left(k\right) = \frac{{h}_{w} \left(k\right)}{{\sum }_{i = 0}^{L} {h}_{w} \left(i\right)}$ (7) after the weighted probability density corresponding to each grayscale value in the target sub-grayscale histogram Hᵢ is normalized based on formula (7), the weighted grayscale histogram H_{w} = {h_{w}(0), h_{w}(1), ..., h_{w}(L)} can be obtained.

Step 130, fusing the source grayscale histogram and the weighted grayscale histogram to obtain a target grayscale histogram.

For example, the source grayscale histogram and the weighted grayscale histogram are fused using the cumulative distribution of the source grayscale histogram, such as an adaptive linear combination is performed on the source grayscale histogram and the weighted grayscale histogram. The step 130 may include: determining a cumulative distribution of the source grayscale histogram; and fusing the source grayscale histogram and the weighted grayscale histogram based on the cumulative distribution to obtain the target grayscale histogram.

For example, for each grayscale value in the source grayscale histogram, the cumulative distribution probability corresponding to the grayscale value can be determined based on the following formula (8): $c \left(k\right) = {\sum }_{i = 0}^{k} {h}_{v} \left(i\right)$ (8) where c(k) represents the cumulative distribution probability corresponding to a grayscale value k in the source grayscale histogram, and hᵥ(i) represents the number of pixels corresponding to a grayscale value i in the source grayscale histogram. After the cumulative distribution probability corresponding to each grayscale value in the source grayscale histogram is calculated using formula (8), the overall cumulative distribution of the source grayscale histogram can be obtained.

Furthermore, each grayscale value in the source grayscale histogram and the weighted grayscale histogram can be fused based on the following formula (9): ${h}_{d} \left(k\right) = \frac{1}{1 + c \left(k\right)} ⋅ {h}_{v} \left(k\right) + \frac{c \left(k\right)}{1 + c \left(k\right)} ⋅ {h}_{w} \left(k\right)$ (9) where h_{d}(k) represents the number of pixels after fusion of grayscale value k, hᵥ(k) represents the number of pixels corresponding to a grayscale value k in the source grayscale histogram Hᵥ, and h_{w}(k) represents the number of pixels corresponding to a grayscale value k in the weighted grayscale histogram H_{w}.

After the source grayscale histogram and each grayscale value in the weighted grayscale histogram are fused using the formula (9), the target grayscale histogram H_{d} = {h_{d}(0), h_{d}(1), ..., h_{d}(L)} can be obtained.

Step 140, determining a grayscale mapping curve of the target grayscale histogram, and performing grayscale mapping on the infrared image to be processed based on the grayscale mapping curve to obtain a contrast-enhanced image of the infrared image to be processed.

After the target grayscale histogram is obtained, a grayscale mapping curve can be constructed based on the cumulative distribution of the target grayscale histogram, and the grayscale mapping of the infrared image to be processed can be completed using this grayscale mapping curve, thereby achieving contrast enhancement of the infrared image to be processed.

The cumulative distribution of the target grayscale histogram can be determined according to the following formula (10): ${c}_{d} \left(k\right) = {\sum }_{i = 0}^{k} {h}_{d} \left(i\right)$ (10) where c_{d}(k) represents the cumulative distribution probability corresponding to a grayscale value k in the target grayscale histogram, and h_{d}(i) represents the number of pixels corresponding to a grayscale value i in the target grayscale histogram.

After the cumulative distribution probability corresponding to each grayscale value in the target grayscale histogram is determined according to the formula (10), the cumulative distribution F_{d} of the target grayscale histogram can be obtained and can be expressed as F_{d} = {c_{d}(0), c_{d}(1), ... , c_{d}(L)}.

After the cumulative distribution F_{d} of the target grayscale histogram can be obtained, the grayscale mapping curve can be constructed according to the following formula (11): $Curve \left(k\right) = \frac{{c}_{d} \left(k\right)}{{c}_{d} \left(L\right)} ∗ L$ (11) where Curve(k) represents grayscale mapping output of the grayscale value k, c_{d}(k) represents the cumulative distribution probability corresponding to the grayscale value k and L represents the maximum grayscale value that can be represented in the grayscale histogram.

In the enhancement method for the infrared image, the enhancement method includes acquiring a source grayscale histogram of an infrared image to be processed, and iteratively segmenting the source grayscale histogram based on distribution feature information of the source grayscale histogram to obtain a set of target sub-histograms; performing probability density correction on each target sub-grayscale histogram among the set of target sub-histograms to obtain a weighted grayscale histogram; fusing the source grayscale histogram and the weighted grayscale histogram to obtain a target grayscale histogram; and determining a grayscale mapping curve of the target grayscale histogram, and performing grayscale mapping on the infrared image to be processed based on the grayscale mapping curve to obtain a contrast-enhanced image of the infrared image to be processed, achieving contrast enhancement of the infrared image. Since the distribution feature information of the source grayscale histogram is utilized when the source grayscale histogram is segmented, that is, original grayscale distribution feature of the infrared image is considered during segmentation, a grayscale range within each segmented target sub-grayscale histogram can belong to the same type of object. Therefore, correction is performed using the segmented target sub-grayscale histograms as units, information loss in the infrared image can be effectively reduced and contrast enhancement effect of the infrared image is improved.

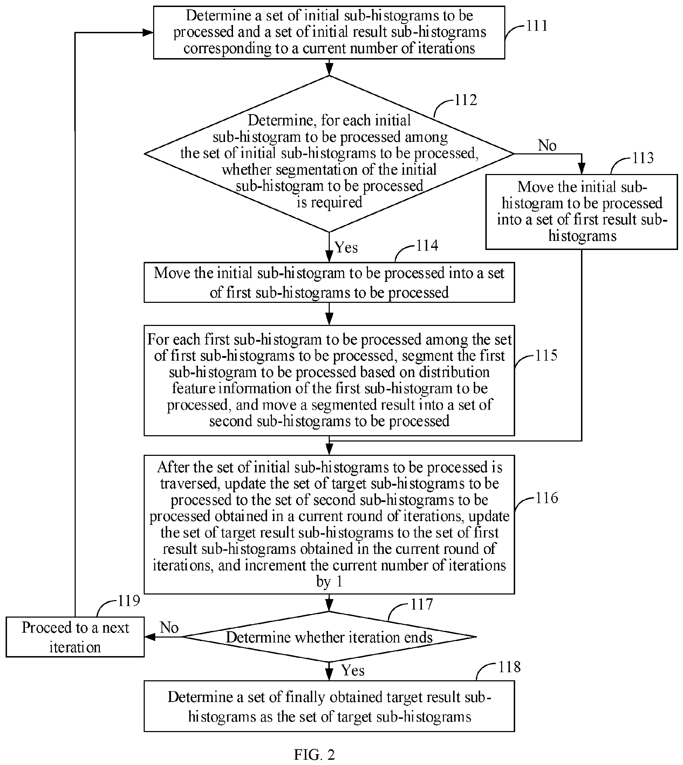

Based on the enhancement method for the infrared image corresponding to the embodiment in FIG. 1, in an example embodiment, FIG. 2 exemplarily illustrates a schematic flowchart of iteratively segmenting a source grayscale histogram based on distribution feature information of the source grayscale histogram. The method may include the following steps 111 to 119.

Step 111, determining a set of initial sub-histograms to be processed and a set of initial result sub-histograms corresponding to a current number of iterations.

After the source grayscale histogram of the infrared image to be processed is acquired, the number of iterations can be initialized to 0, and a current iteration can then begin. In each iteration, the set of initial sub-histograms to be processed and the set of initial result sub-histograms corresponding to the current number of iterations are first determined. Sub-histograms to be segmented and processed in the current iteration are stored using the set of initial sub-histograms to be processed and sub-histograms that no longer need to be segmented are stored using the set of initial result sub-histograms.

An initial value of the current number of iterations is 0. In case that the current number of iterations is 0, the set of initial sub-histograms to be processed is determined as the source grayscale histogram, and the set of initial result sub-histograms is determined as an empty set. In case that the current number of iterations is greater than 0, the set of initial sub-histograms to be processed is updated with a set of target sub-histograms to be processed obtained after a previous iteration for the current number of iterations, and the set of initial result sub-histograms is updated with a set of target result sub-histograms obtained after the previous iteration. In this way, after each iteration is performed, the set of initial sub-histograms to be processed and the set of initial result sub-histograms that do not need to be processed can be determined for the current number of iterations.

For example, *recur* represent the current number of iterations and is initialized to 0, ${S}_{proc}^{o}$ represents the set of initial sub-histograms to be processed, and ${S}_{res}^{o}$ represents the set of initial result sub-histograms. In case that the current number of iterations *recur* is 0, the set of initial sub-histograms to be processed corresponding to the current number of iterations ${S}_{proc}^{o}$ is {Hᵥ} and the set of initial result sub-histograms corresponding to the current number of iterations ${S}_{res}^{o}$ is Ø, where Hᵥ represents the source grayscale histogram. In case that the current number of iterations *recur* is greater than 0, the set of initial sub-histograms to be processed corresponding to the current number of iterations ${S}_{proc}^{o}$ is a set of target sub-histograms to be processed obtained after a (*recur* - 1) iteration and the set of initial result sub-histograms corresponding to the current number of iterations is a set of target result sub-histograms obtained after the (*recur* - 1) iteration.

Step 112, determine, for each initial sub-histogram to be processed among the set of initial sub-histograms to be processed, whether segmentation of the initial sub-histogram to be processed is required .

In each iteration, after the set of initial sub-histograms to be processed is determined, for each initial sub-histogram to be processed among the set of initial sub-histograms to be processed, it can be determined whether segmentation of the initial sub-histogram to be processed is required based on a joint conditional criterion of the current number of iterations and skewed distribution. Step 113 is performed in case that it is determined that segmentation of the initial sub-histogram is not required; step 114 is performed in case that it is determined that segmentation of the initial sub-histogram is required.

Determining whether the segmentation of the initial sub-histogram to be processed is required includes:
determining whether the initial sub-histogram to be processed satisfies a joint conditional criterion of the current number of iterations and skewed distribution; determining that the segmentation of the initial sub-histogram to be processed is required in case that the initial sub-histogram to be processed satisfies the joint conditional criterion of the current number of iterations and the skewed distribution; and determining that the segmentation of the initial sub-histogram to be processed is not required in case that the initial sub-histogram to be processed does not satisfy the joint conditional criterion of the current number of iterations and the skewed distribution.

The joint conditional criterion of the current number of iterations and skewed distribution includes a conditional criterion of the number of iterations and a conditional criterion of the skewed distribution.

Exemplarily, the conditional criterion of the skewed distribution can be based on skewness. The conditional criterion of the skewed distribution includes determining the initial sub-histogram to be processed to be in a skewed distribution in case that an absolute value of the skewness of the initial sub-histogram to be processed is greater than a preset skewness threshold and determining the initial sub-histogram to be processed to be in a symmetrical distribution otherwise.

Exemplarily, the conditional criterion of the number of iterations can be designed based on the number of iterations constraint interval consisting of a preset minimum number of iterations and a preset maximum number of iterations. For example, the conditional criterion of the number of iterations may include determining that segmentation is required in case that the current number of iterations is less than the preset minimum number of iterations, determining a conditional segmentation in case that the current number of iterations is greater than or equal to the preset minimum number of iterations and less than the preset maximum number of iterations, and determining that segmentation is not required in case that the current number of iterations is greater than or equal to the preset maximum number of iterations.

On this basis, determining whether the initial sub-histogram to be processed satisfies the joint conditional criterion of the current number of iterations and skewed distribution includes: determining that the initial sub-histogram to be processed satisfies the joint conditional criterion of the current number of iterations and the skewed distribution in case of determining that the segmentation is required based on the current number of iterations or in case of determining that conditional segmentation is performed based on the current number of iterations and determining the initial sub-histogram to be processed to be in a skewed distribution based on the conditional criterion of the skewed distribution; and determining that the initial sub-histogram to be processed does not satisfy the joint conditional criterion of the current number of iterations and the skewed distribution in case of determining that the segmentation is not required based on the current number of iterations or in case of determining that conditional segmentation is performed based on the current number of iterations and determining the initial sub-histogram to be processed to be in a symmetrical distribution based on the conditional criterion of the skewed distribution.

Exemplarily, the skewness of the initial sub-histogram to be processed can be determined based on the mean and standard deviation of the initial sub-histogram to be processed. For each initial sub-histogram to be processed H_{sub}, the skewness of the initial sub-histogram H_{sub} can be determined according to the following formula (12): $skew = \frac{{\sum }_{i = {l}_{min}}^{{l}_{max}} {h}_{sub} \left(i\right) ⋅ {\left(i-μ\right)}^{3}}{{σ}^{3} ⋅ {\sum }_{i = {l}_{min}}^{{l}_{max}} {h}_{sub} \left(i\right)}$ (12)
where *skew* represents the skewness, lₘₐₓ represents a maximum grayscale value of the sub-histogram to be processed, lₘᵢₙ represents a minimum grayscale value of the sub-histogram to be processed, h_{sub}(i) represents a number of pixels with grayscale value i in the sub-histogram to be processed, σ represents standard deviation of the sub-histogram to be processed, and µ represents mean of the sub-histogram to be processed;
the standard deviation σ can be determined according to the following formula (13): $σ = \sqrt{\frac{{\sum }_{i = {l}_{min}}^{{l}_{max}} {h}_{sub} \left(i\right) ⋅ {\left(i-μ\right)}^{2}}{{\sum }_{i = {l}_{min}}^{{l}_{max}} {h}_{sub} \left(i\right)}}$ (13)
the mean µ can be determined according to the following formula (14): $μ = \frac{{\sum }_{i = {l}_{min}}^{{l}_{max}} {h}_{sub} \left(i\right) ⋅ i}{{\sum }_{i = {l}_{min}}^{{l}_{max}} {h}_{sub} \left(i\right)}$ (14)

Step 113, moving the initial sub-histogram to be processed into a set of first result sub-histograms.

An initial state of the set of first result sub-histograms is the set of initial result sub-histograms, meaning that upon entering the current iteration, the set of first result sub-histograms can be initialized to the set of initial result sub-histograms determined in step 111. The set of first result sub-histograms can store sub-histograms that no longer need to be segmented in this iteration.

Step 114, moving the initial sub-histogram to be processed into a set of first sub-histograms to be processed.

In the current iteration, the set of first sub-histograms to be processed can be initialized to an empty set. During processing each initial sub-histogram in the set of initial sub-histograms to be processed, the initial sub-histogram to be processed can be moved into the set of first sub-histograms to be processed in case of determining that segmentation of the initial sub-histogram to be processed is required. That is, the set of first sub-histograms to be processed stores sub-histograms that still need to be segmented.

Exemplarily, in conjunction with steps 112 to 114, it can be understood that in the current iteration, after the set of initial sub-histograms to be processed and the set of initial result sub-histograms are determined, the set of first result sub-histograms and the set of first sub-histograms to be processed can be obtained based on the set of initial sub-histograms to be processed and the set of initial result sub-histograms, which may include:
moving all sub-histograms in the set of initial sub-histograms to be processed into the set of first sub-histograms to be processed in case of determining that segmentation is required based on the conditional criterion of the number of iterations;
determining a skewed distribution of each initial sub-histogram to be processed in the set of initial sub-histograms to be processed based on the conditional criterion of the skewed distribution in case of determining the conditional segmentation based on the conditional criterion of the number of iterations; determining that segmentation of the initial sub-histogram to be processed is required and moving the initial sub-histogram to be processed into the set of first sub-histograms to be processed in case that the initial sub-histogram to be processed to be in the skewed distribution; determining that segmentation of the initial sub-histogram to be processed is not required and moving the initial sub-histogram to be processed into the set of first result sub-histograms in case that the initial sub-histogram to be processed to be in a symmetrical distribution; and
setting the set of first sub-histograms to be processed into an empty set and moving all initial sub-histograms to be processed in the set of initial sub-histograms to be processed into the set of first result sub-histograms in case of determining that segmentation is not required based on the conditional criterion of the number of iterations.

For example, assuming that *recur* represent the current number of iterations, ${S}_{proc}^{o}$ represents the set of initial sub-histograms to be processed, ${S}_{res}^{o}$ represents the set of initial result sub-histograms, ${S}_{proc}^{′}$ represents the set of first sub-histograms to be processed, ${S}_{res}^{′}$ represents the set of first result sub-histograms, *recur*ₘᵢₙ represents a preset minimum number of iterations, *recur*ₘₐₓ represents a preset maximum number of iterations, *skew* represents the skewness, τ_{skew} represents a preset skewness threshold. *recur* can be initialized to 0. In each iteration, ${S}_{proc}^{′}$ can be initialized to Ø and ${S}_{res}^{′}$ can be initialized to ${S}_{res}^{o}$;
all sub-histograms in the set of initial sub-histograms to be processed ${S}_{proc}^{o}$ are moved into the set of first sub-histograms to be processed ${S}_{proc}^{′}$ in case that *recur* < *recur*ₘᵢₙ , i.e., ${S}_{proc}^{′} = {S}_{proc}^{o}$.

In case that *recur*ₘᵢₙ ≤ *recur* < *recur*ₘₐₓ*,* for each initial sub-histogram to be processed H_{sub} in ${S}_{proc}^{o}$ (i.e., for $∀ {H}_{sub} ∈ {S}_{proc}^{o}$), whether the segmentation of H_{sub} is required is determined based on skewness of H_{sub}. The segmentation of the initial sub-histogram to be processed H_{sub} is required in case that |skew| ≥ τ_{skew} and H_{sub} is moved into the set of first sub-histograms to be processed ${S}_{proc}^{′}$, i.e., ${S}_{proc}^{′} = {S}_{proc}^{′} + \left\{{H}_{sub}\right\}$; otherwise, the segmentation of H_{sub} is not required and H_{sub} is then moved into the set of first result sub-histograms ${S}_{res}^{′}$, i.e., ${S}_{res}^{′} = {S}_{res}^{′} + \left\{{H}_{sub}\right\}$.

In case that *recur* ≥ *recur*ₘₐₓ*,* further segmentation of the set of initial sub-histograms to be processed ${S}_{proc}^{o}$ is stopped and ${S}_{proc}^{o}$ is moved into the set of first result sub-histograms ${S}_{res}^{′}$, i. e., ${S}_{res}^{′} = {S}_{res}^{′} + {S}_{proc}^{o}$.

Exemplarily, the preset minimum number of iterations, the preset maximum number of iterations, and the preset skewness threshold can be determined based on experience or experiments. For instance, the preset minimum number of iterations can be 2, the preset maximum number of iterations can be 5, and the preset skewness threshold can be 0.5. This defines the number of iterations to a minimum of 2 and a maximum of 5, avoiding premature termination of the iteration when the grayscale histogram is symmetrical overall but severely asymmetrical locally, and further avoiding continuous segmentation within a small grayscale range.

Step 115, for each first sub-histogram to be processed among the set of first sub-histograms to be processed, segmenting the first sub-histogram to be processed based on distribution feature information of the first sub-histogram to be processed and moving a segmented result into a set of second sub-histograms to be processed.

For each first sub-histogram to be processed among the set of first sub-histograms to be processed, grayscale segmentation points can be determined based on the distribution feature information of the first sub-histogram to be processed, and the first sub-histogram to be processed is segmented using these grayscale segmentation points.

Exemplarily, the distribution feature information includes mean, standard deviation, and skewness; segmenting the first sub-histogram to be processed based on the distribution feature information of the first sub-histogram to be processed includes:
determining grayscale segmentation points of the first sub-histogram to be processed based on the mean, the standard deviation, and the skewness of the first sub-histogram to be processed; and
segmenting the first sub-histogram to be processed using the grayscale segmentation points.

Exemplarily, the mean, the standard deviation, and the skewness of the first sub-histogram to be processed can be determined according to the formulas (12) to (14) above. the grayscale segmentation points of the first sub-histogram to be processed can be then determined according to the following formula (15): ${l}_{seg} = \left⌊μ+\sqrt[3]{skew}⋅σ\right⌋$ (15) where l_{seg} represents the grayscale segmentation points, *skew* represents the skewness, σ represents the standard deviation o and µ represents the mean.

Assuming that a grayscale interval of the first sub-histogram to be processed H_{sub} is [lₘᵢₙ, lₘₐₓ], H_{sub} is segmented using the grayscale segmentation point l_{seg} and segmentation intervals [lₘᵢₙ, l_{seg}] and [l_{seg} + 1, lₘₐₓ] can be obtained and correspond to the segmented sub-histograms H_{sub1} and H_{sub2}, respectively. The segmented H_{sub1} and H_{sub2} can be moved into a set of second sub-histogram to be processed ${S}_{proc}^{"}$i.e., ${S}_{proc}^{"} = {S}_{proc}^{"} + \left\{{H}_{sub 1}, {H}_{sub 2}\right\}$.

Step 116, after the set of initial sub-histograms to be processed is traversed, updating the set of target sub-histograms to be processed to the set of second sub-histograms to be processed obtained in a current round of iterations, updating the set of target result sub-histograms to the set of first result sub-histograms obtained in the current round of iterations, and incrementing the current number of iterations by 1.

After the set of initial sub-histograms to be processed is traversed, the set of target sub-histograms to be processed ${S}_{proc}^{d}$ is updated with the set of second sub-histograms to be processed ${S}_{proc}^{"}$ obtained in a current round of iterations, the set of target result sub-histograms ${S}_{res}^{d}$ is updated with the set of first result sub-histograms ${S}_{res}^{′}$ obtained in the current round of iterations, i.e., ${S}_{proc}^{d} = {S}_{proc}^{"} , {S}_{res}^{d} = {S}_{res}^{′}$, *recur* = *recur* + 1.

The set of target sub-histograms to be processed can store sub-histograms that need to be further segmented after the set of initial sub-histograms to be processed are processed, which can be used as the set of initial sub-histograms to be processed in the next iteration. The set of target result sub-histograms can store the sub-histograms that do not need to be further segmented after the set of initial sub-histograms to be processed are processed, which can be used as the set of initial result sub-histograms in the next iteration.

Step 117, determining whether iteration ends.

Exemplarily, the iteration is considered to end in case that the set of target sub-histograms to be processed is empty. Or, the iteration is considered to end in case that the current number of iterations exceeds a preset number of iterations threshold.

Step 118 is performed in case that the iteration ends and step 119 is performed otherwise.

Step 118, determining a set of finally obtained target result sub-histograms as the set of target sub-histograms.

The set of finally obtained target result sub-histograms ${S}_{res}^{d}$ is determined as the set of target sub-histograms and the set of target sub-histograms is output.

Step 119, proceeding to a next iteration.

Next iteration is performed in case that the iteration does not end. The set of initial sub-histograms to be processed ${S}_{proc}^{o}$ for the next iteration may be updated with the set of target sub-histograms to be processed ${S}_{proc}^{d}$ obtained in the current iteration and the set of initial result sub-histograms ${S}_{res}^{o}$ for the next iteration may be updated with the set of target result sub-histograms ${S}_{res}^{d}$ obtained in the current iteration, i.e., ${S}_{proc}^{0} = {S}_{proc}^{d} , {S}_{res}^{0} = {S}_{res}^{d}$. Steps 111 to 119 are repeated until the iteration ends, and the set of target sub-histograms is obtained.

In an exemplary embodiment, the source grayscale histogram can be normalized to obtain a normalized source grayscale histogram after the source grayscale histogram of the infrared image to be processed is acquired and the normalized source grayscale histogram is then iteratively segmented based on the distribution feature information of the normalized source grayscale histogram. That is, Hᵥ mentioned above can be the normalized source grayscale histogram.

For example, the source grayscale histogram can be converted into a probability density function according to the following formula (16) to normalize the source grayscale histogram. Formula (16) can be expressed as: ${h}_{v} \left(k\right) = \frac{{h}_{v} \left(k\right)}{{\sum }_{i = 0}^{L} {h}_{v} \left(i\right)}$ (16) where hᵥ(i) represents the number of pixels corresponding to a grayscale value i in the source grayscale histogram; hᵥ(k) on the right side of the formula represents the number of pixels corresponding to a grayscale value k in the source grayscale histogram and hᵥ(k) on the left side of the formula the probability density corresponding to a grayscale value k, that is, the normalization result of hᵥ(i).

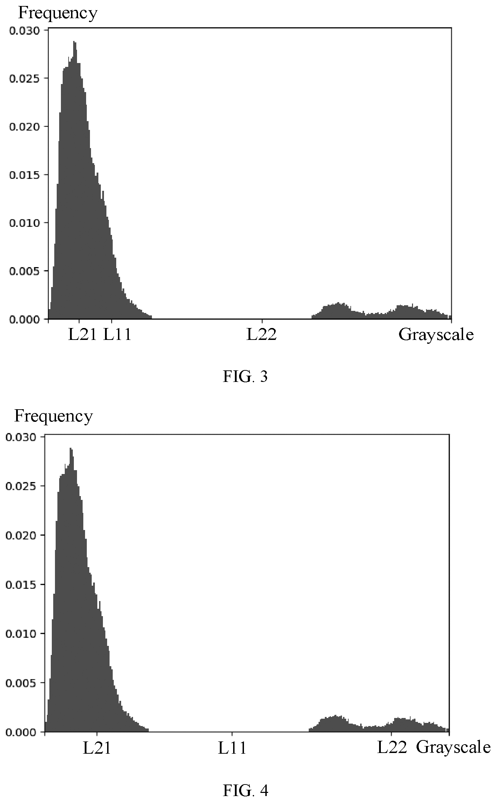

The enhancement method for the infrared image according to the embodiments of the present application is further described below in conjunction with FIG. 3 and FIG. 4. Taking a small target object against a large background in an infrared image as an example, FIG. 3 exemplarily illustrates a schematic diagram of segmentation effect of segmenting a source grayscale histogram using a mean as a segmentation point and FIG. 4 exemplarily illustrates a schematic diagram of segmentation effect of segmenting a source grayscale histogram based on segmentation points determined based on mean, standard deviation, and skewness. Referring to FIG. 3 and FIG. 4, the source grayscale histogram corresponding to the infrared image exhibits a right-skewed distribution. Taking the number of iterations of 2 as an example, a complete source grayscale histogram can be segmented into 4 segments. L11 is a grayscale segmentation point for the first segmentation of the histogram, and L21 and L22 are the grayscale segmentation points for the second segmentation. The grayscale of the histogram is mainly concentrated in two regions: a large portion is concentrated in the low grayscale region, and a small portion is concentrated in the high grayscale region. These two regions can represent the background and the target object, respectively.

The segmentation method in FIG. 3 is highly adaptable to relatively symmetrical grayscale distributions. However, for the high-skewness distribution shown in FIG. 3, the grayscale segmentation point L11 calculated in the first iteration is located inside the low grayscale distribution region. This causes grayscale values belonging to one object to be segmented into the grayscale range of another object, resulting in inaccurate segmentation results. Compared to the method in FIG. 3 that uses the mean for segmentation, the source grayscale histogram is segmented based on segmentation points determined based on corrected mean using standard deviation and skewness according to FIG. 4, the grayscale segmentation points determined in the first iteration can accurately separate the low grayscale distribution region from the high grayscale distribution region, correcting the problem of poor adaptability to high-skewness distributions when using the mean alone, and further improving the accuracy of segmenting the grayscale histogram.

In the enhancement method for the infrared image of the present application, the grayscale segmentation points can be determined based on the mean, the standard deviation, and the skewness of the source grayscale histogram, and the source grayscale histogram is iteratively segmented based on the segmentation points. The mean can be corrected using the standard deviation and the skewness, which exhibits strong adaptability to both horizontally symmetrical grayscale distributions and highly skewed grayscale distributions and can accurately segment highly skewed grayscale histograms, and improve the accuracy of segmenting the grayscale histogram. Furthermore, whether to further segment the sub-grayscale histogram can be automatically terminated based on conditional determination. In case that the skewness of the segmented sub-grayscale histogram is less than a preset skewness threshold, the sub-grayscale histogram is determined to be horizontally symmetrical, and the grayscale range within the sub-grayscale histogram is considered to belong to the same type of object, thus no further segmentation is performed. The number of iterations does not need to be manually set and the sub-histograms to be further segmented is adaptively determined based on the current number of iterations and the skewness of the sub-grayscale histogram. Iterative segmentation ends in case that no sub-histograms to be further segmented are found, improving the adaptability of the iterative segmentation.

An enhancement apparatus for an infrared image according to the present application is described below and the enhancement apparatus for the infrared image described below corresponds to the enhancement method for the infrared image described above.

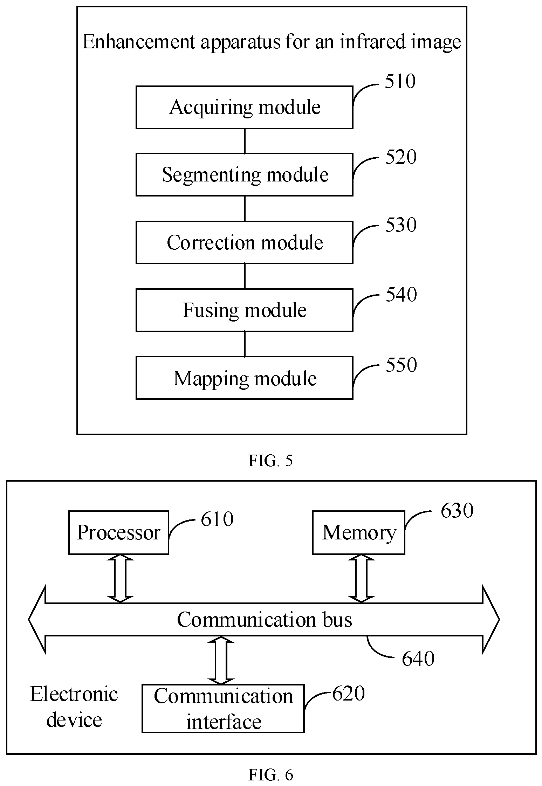

FIG. 5 exemplarily illustrates a schematic structural diagram of an enhancement apparatus for an infrared image according to an embodiment of the present application. Referring to FIG. 5, the enhancement apparatus for the infrared image may include an acquiring module 510 configured for acquiring a source grayscale histogram of an infrared image to be processed, a segmenting module 520 configured for iteratively segmenting the source grayscale histogram based on distribution feature information of the source grayscale histogram to obtain a set of target sub-histograms; a correction module 530 configured for performing probability density correction on each target sub-grayscale histogram among the set of target sub-histograms to obtain a weighted grayscale histogram; a fusing module 540 configured for fusing the source grayscale histogram and the weighted grayscale histogram to obtain a target grayscale histogram; and a mapping module 550 configured for determining a grayscale mapping curve of the target grayscale histogram, and performing grayscale mapping on the infrared image to be processed based on the grayscale mapping curve to obtain a contrast-enhanced image of the infrared image to be processed.

In an exemplary embodiment, the segmenting module 520 includes:
a first updating unit configured for determining a set of initial sub-histograms to be processed as the source grayscale histogram, and determining a set of initial result sub-histograms as an empty set in case that a current number of iterations is 0; an initial value of the current number of iterations being 0; in case that the current number of iterations is greater than 0, updating the set of initial sub-histograms to be processed with a set of target sub-histograms to be processed obtained after a previous iteration for the current number of iterations, and updating the set of initial result sub-histograms with a set of target result sub-histograms obtained after the previous iteration;
a segmentation determining unit configured for determining, for each initial sub-histogram to be processed among the set of initial sub-histograms to be processed, whether segmentation of the initial sub-histogram to be processed is required;
a first segmentation processing unit configured for moving, in case that the segmentation of the initial sub-histogram to be processed is required, the initial sub-histogram to be processed into a set of first sub-histograms to be processed;
a second segmentation processing unit configured for moving, in case that the segmentation of the initial sub-histogram to be processed is not required, the initial sub-histogram to be processed into a set of first result sub-histograms, an initial state of the set of first result sub-histograms being the set of initial result sub-histograms;
a segmentation unit configured for, for each first sub-histogram to be processed among the set of first sub-histograms to be processed, segmenting the first sub-histogram to be processed based on distribution feature information of the first sub-histogram to be processed and moving a segmented result into a set of second sub-histograms to be processed;
a second updating unit configured for after the set of initial sub-histograms to be processed is traversed, updating the set of target sub-histograms to be processed with the set of second sub-histograms to be processed obtained in a current round of iterations, updating the set of target result sub-histograms with the set of first result sub-histograms obtained in the current round of iterations, and incrementing the current number of iterations by 1; and
an iteration processing unit configured for determining whether iteration ends, determining a set of finally obtained target result sub-histograms as the set of target sub-histograms in case that the iteration ends and proceeding to a next iteration in case that the iteration does not end.

In an exemplary embodiment, the segmentation determining unit is further configured for determining whether the initial sub-histogram to be processed satisfies a joint conditional criterion of the current number of iterations and skewed distribution; determining that segmentation of the initial sub-histogram to be processed is required in case that the initial sub-histogram to be processed satisfies the joint conditional criterion of the current number of iterations and the skewed distribution; and determining that segmentation of the initial sub-histogram to be processed is not required in case that the initial sub-histogram to be processed does not satisfy the joint conditional criterion of the current number of iterations and the skewed distribution.

In an exemplary embodiment, the distribution feature information includes mean, standard deviation, and skewness and the segmentation unit is further configured for determining grayscale segmentation points of the first sub-histogram to be processed based on the mean, the standard deviation, and the skewness of the first sub-histogram to be processed; and segmenting the first sub-histogram to be processed using the grayscale segmentation points

In an exemplary embodiment, the segmenting module 520 further includes an iteration end determining module configured for determining that the iteration ends in case that the set of initial sub-histograms to be processed is empty.

In an exemplary embodiment, the acquiring module 510 includes: a statistics unit configured for performing grayscale statistics on the infrared image to be processed to obtain a first grayscale histogram; a sorting unit configured for sorting statistical values of the first grayscale histogram in a descending order to obtain a second grayscale histogram, and determining a cumulative distribution of the second grayscale histogram; a first determining unit configured for positioning a target grayscale value of which a first cumulative distribution proportion is greater than or equal to a preset proportion threshold in the cumulative distribution and determining a statistical value corresponding to the target grayscale value in the second grayscale histogram as a target grayscale threshold; and a filtering unit configured for performing grayscale filtering on the second grayscale histogram based on the target grayscale threshold to obtain the source grayscale histogram.

In an exemplary embodiment, the correction module 530 includes: a second determining unit configured for determining, for each target sub-grayscale histogram among the set of target sub-histograms, a probability density sum of the target sub-grayscale histogram; a weighing unit configured for weighting the target sub-grayscale histogram based on the probability density sum to obtain a weighted grayscale sub-histogram corresponding to the target sub-grayscale histogram; and a third determining unit configured for determining each weighted grayscale sub-histogram as the weighted grayscale histogram.

In an exemplary embodiment, the fusing module 540 includes: a fourth determining unit configured for determining a cumulative distribution of the source grayscale histogram; and a fusion unit configured for fusing the source grayscale histogram and the weighted grayscale histogram based on the cumulative distribution to obtain the target grayscale histogram

FIG. 6 illustrates a schematic structural diagram of an electronic device. As shown in FIG. 6, the electronic device may include a processor 610, a communication interface 620, a memory 630, and a communication bus 640. The processor 610, the communication interface 620, and the memory 630 communicate with each other through the communication bus 640. The processor 610 can call logical instructions in the memory 630 to perform the enhancement method for the infrared image according to any of the above-described method embodiments

Furthermore, the logical instructions in the memory 630 can be implemented as software functional units and, when sold or used as independent products, can be stored in a computer-readable storage medium. Based on this understanding, the solution of the present application, in essence, or the part that contributes to the related art, or a part of the solution, can be embodied in the form of a software product. The computer software product is stored in a storage medium and includes several instructions to cause a computer device (which may be a personal computer, a server, or a network device, etc.) to perform all or part of the steps of the method described in each embodiment of the present application. The storage media include: a USB flash drive, a portable hard drive, a read-only memory (ROM), a random access memory (RAM), a magnetic disk, or an optical disk, etc., any medium capable of storing program code.

According to the present application, there is further provided a computer program product including a computer program that can be stored on a computer-readable storage medium, wherein the computer program, when executed by a processor, causes a computer to perform the enhancement method for the infrared image as described in above embodiments.

According to the present application, there is further provided a computer-readable storage medium storing a computer program, wherein the computer program, when executed by a processor, performs the enhancement method for the infrared image as described in above embodiments.

For example, the computer-readable storage medium includes a non-transitory computer-readable storage medium.

The apparatus embodiments described above are merely illustrative. The units described as separate components may or may not be physically separate. The components shown as units may or may not be physical units; that is, they may be in one place or distributed across multiple network units. Some or all of the modules can be selected to achieve the purpose of this embodiment according to actual needs. Those skilled in the art can understand and implement these methods without any creative effort.

Through the above description of the embodiments, those skilled in the art can clearly understand that each embodiment can be implemented using software plus necessary general-purpose hardware platforms, or of course, hardware. Based on this understanding, the above solutions, in essence or in terms of their contribution to the related art, can be embodied in the form of a software product. This computer software product can be stored in a computer-readable storage medium, such as ROM/RAM, a magnetic disk, an optical disk, etc., and includes several instructions to cause a computer device (which may be a personal computer, server, or network device, etc.) to perform the methods described in each embodiment or certain parts of the embodiments.

Finally, it should be noted that the above embodiments are only used to illustrate the solutions of the present application, and not to limit thereto. Although the present application has been described in detail in conjunction with the foregoing embodiments, those skilled in the art should understand that modifications can still be made to the solutions described in each of the foregoing embodiments, or equivalent substitutions can be made to some of the features; and these modifications or substitutions do not cause the essence of the corresponding solutions to deviate from the scope of the solutions of each embodiment of the present application.

## Claims

1. An enhancement method for an infrared image, comprising:
acquiring a source grayscale histogram of an infrared image to be processed, and iteratively segmenting the source grayscale histogram based on distribution feature information of the source grayscale histogram to obtain a set of target sub-histograms;
performing probability density correction on each target sub-grayscale histogram among the set of target sub-histograms to obtain a weighted grayscale histogram;
fusing the source grayscale histogram and the weighted grayscale histogram to obtain a target grayscale histogram; and
determining a grayscale mapping curve of the target grayscale histogram, and performing grayscale mapping on the infrared image to be processed based on the grayscale mapping curve to obtain a contrast-enhanced image of the infrared image to be processed.

2. The enhancement method for the infrared image of claim 1, wherein iteratively segmenting the source grayscale histogram based on the distribution feature information of the source grayscale histogram to obtain the set of target sub-histograms comprises:
in case that a current number of iterations is 0, determining a set of initial sub-histograms to be processed as the source grayscale histogram, and determining a set of initial result sub-histograms as an empty set; wherein an initial value of the current number of iterations is 0;
in case that the current number of iterations is greater than 0, updating the set of initial sub-histograms to be processed to a set of target sub-histograms to be processed obtained after a previous iteration for the current number of iterations, and updating the set of initial result sub-histograms to a set of target result sub-histograms obtained after the previous iteration;
determining, for each initial sub-histogram to be processed among the set of initial sub-histograms to be processed, whether segmentation of the initial sub-histogram to be processed is required;
moving, in case that the segmentation of the initial sub-histogram to be processed is required, the initial sub-histogram to be processed into a set of first sub-histograms to be processed;
moving, in case that the segmentation of the initial sub-histogram to be processed is not required, the initial sub-histogram to be processed into a set of first result sub-histograms, wherein an initial state of the set of first result sub-histograms is the set of initial result sub-histograms;
for each first sub-histogram to be processed among the set of first sub-histograms to be processed, segmenting the first sub-histogram to be processed based on distribution feature information of the first sub-histogram to be processed, and moving a segmented result into a set of second sub-histograms to be processed;
after the set of initial sub-histograms to be processed is traversed, updating the set of target sub-histograms to be processed to the set of second sub-histograms to be processed obtained in a current round of iterations, updating the set of target result sub-histograms with the set of first result sub-histograms obtained in the current round of iterations, and incrementing the current number of iterations by 1; and
determining whether iteration ends, determining a set of finally obtained target result sub-histograms as the set of target sub-histograms in case that the iteration ends, and proceeding to a next iteration in case that the iteration does not end.

3. The enhancement method for the infrared image of claim 2, wherein determining whether the segmentation of the initial sub-histogram to be processed is required comprises:
determining whether the initial sub-histogram to be processed satisfies a joint conditional criterion of the current number of iterations and skewed distribution;
determining that the segmentation of the initial sub-histogram to be processed is required in case that the initial sub-histogram to be processed satisfies the joint conditional criterion of the current number of iterations and the skewed distribution; and
determining that the segmentation of the initial sub-histogram to be processed is not required in case that the initial sub-histogram to be processed does not satisfy the joint conditional criterion of the current number of iterations and the skewed distribution.

4. The enhancement method for the infrared image of claim 2, wherein the distribution feature information comprises mean, standard deviation and skewness; segmenting the first sub-histogram to be processed based on the distribution feature information of the first sub-histogram to be processed comprises:
determining grayscale segmentation points of the first sub-histogram to be processed based on the mean, the standard deviation and the skewness of the first sub-histogram to be processed; and
segmenting the first sub-histogram to be processed by using the grayscale segmentation points.

5. The enhancement method for the infrared image of claim 1, wherein acquiring the source grayscale histogram of the infrared image to be processed comprises:
performing grayscale statistics on the infrared image to be processed to obtain a first grayscale histogram;
sorting statistical values of the first grayscale histogram in a descending order to obtain a second grayscale histogram, and determining a cumulative distribution of the second grayscale histogram;
positioning a target grayscale value of which a first cumulative distribution proportion is greater than or equal to a preset proportion threshold in the cumulative distribution and determining a statistical value corresponding to the target grayscale value in the second grayscale histogram as a target grayscale threshold; and
performing grayscale filtering on the second grayscale histogram based on the target grayscale threshold to obtain the source grayscale histogram.

6. The enhancement method for the infrared image of claim 2, wherein acquiring the source grayscale histogram of the infrared image to be processed comprises:
performing grayscale statistics on the infrared image to be processed to obtain a first grayscale histogram;
sorting statistical values of the first grayscale histogram in a descending order to obtain a second grayscale histogram, and determining a cumulative distribution of the second grayscale histogram;
positioning a target grayscale value of which a first cumulative distribution proportion is greater than or equal to a preset proportion threshold in the cumulative distribution and determining a statistical value corresponding to the target grayscale value in the second grayscale histogram as a target grayscale threshold; and
performing grayscale filtering on the second grayscale histogram based on the target grayscale threshold to obtain the source grayscale histogram.

7. The enhancement method for the infrared image of claim 3, wherein acquiring the source grayscale histogram of the infrared image to be processed comprises:
performing grayscale statistics on the infrared image to be processed to obtain a first grayscale histogram;
sorting statistical values of the first grayscale histogram in a descending order to obtain a second grayscale histogram, and determining a cumulative distribution of the second grayscale histogram;
positioning a target grayscale value of which a first cumulative distribution proportion is greater than or equal to a preset proportion threshold in the cumulative distribution and determining a statistical value corresponding to the target grayscale value in the second grayscale histogram as a target grayscale threshold; and
performing grayscale filtering on the second grayscale histogram based on the target grayscale threshold to obtain the source grayscale histogram.

8. The enhancement method for the infrared image of claim 4, wherein acquiring the source grayscale histogram of the infrared image to be processed comprises:
performing grayscale statistics on the infrared image to be processed to obtain a first grayscale histogram;
sorting statistical values of the first grayscale histogram in a descending order to obtain a second grayscale histogram, and determining a cumulative distribution of the second grayscale histogram;
positioning a target grayscale value of which a first cumulative distribution proportion is greater than or equal to a preset proportion threshold in the cumulative distribution and determining a statistical value corresponding to the target grayscale value in the second grayscale histogram as a target grayscale threshold; and
performing grayscale filtering on the second grayscale histogram based on the target grayscale threshold to obtain the source grayscale histogram.

9. The enhancement method for the infrared image of claim 1, wherein performing the probability density correction on each target sub-grayscale histogram among the set of target sub-histograms to obtain the weighted grayscale histogram comprises:
determining, for each target sub-grayscale histogram among the set of target sub-histograms, a probability density sum of the target sub-grayscale histogram;
weighting the target sub-grayscale histogram based on the probability density sum to obtain a weighted grayscale sub-histogram corresponding to the target sub-grayscale histogram; and
determining each weighted grayscale sub-histogram as the weighted grayscale histogram.

10. The enhancement method for the infrared image of claim 2, wherein performing the probability density correction on each target sub-grayscale histogram among the set of target sub-histograms to obtain the weighted grayscale histogram comprises:
determining, for each target sub-grayscale histogram among the set of target sub-histograms, a probability density sum of the target sub-grayscale histogram;
weighting the target sub-grayscale histogram based on the probability density sum to obtain a weighted grayscale sub-histogram corresponding to the target sub-grayscale histogram; and
determining each weighted grayscale sub-histogram as the weighted grayscale histogram.

11. The enhancement method for the infrared image of claim 3, wherein performing the probability density correction on each target sub-grayscale histogram among the set of target sub-histograms to obtain the weighted grayscale histogram comprises:
determining, for each target sub-grayscale histogram among the set of target sub-histograms, a probability density sum of the target sub-grayscale histogram;
weighting the target sub-grayscale histogram based on the probability density sum to obtain a weighted grayscale sub-histogram corresponding to the target sub-grayscale histogram; and
determining each weighted grayscale sub-histogram as the weighted grayscale histogram.

12. The enhancement method for the infrared image of claim 4, wherein performing the probability density correction on each target sub-grayscale histogram among the set of target sub-histograms to obtain the weighted grayscale histogram comprises:
determining, for each target sub-grayscale histogram among the set of target sub-histograms, a probability density sum of the target sub-grayscale histogram;
weighting the target sub-grayscale histogram based on the probability density sum to obtain a weighted grayscale sub-histogram corresponding to the target sub-grayscale histogram; and
determining each weighted grayscale sub-histogram as the weighted grayscale histogram.

13. The enhancement method for the infrared image of claim 1, wherein fusing the source grayscale histogram and the weighted grayscale histogram to obtain the target grayscale histogram comprises:
determining a cumulative distribution of the source grayscale histogram; and
fusing the source grayscale histogram and the weighted grayscale histogram based on the cumulative distribution to obtain the target grayscale histogram.

14. The enhancement method for the infrared image of claim 2, wherein fusing the source grayscale histogram and the weighted grayscale histogram to obtain the target grayscale histogram comprises:
determining a cumulative distribution of the source grayscale histogram; and
fusing the source grayscale histogram and the weighted grayscale histogram based on the cumulative distribution to obtain the target grayscale histogram.

15. The enhancement method for the infrared image of claim 3, wherein fusing the source grayscale histogram and the weighted grayscale histogram to obtain the target grayscale histogram comprises:
determining a cumulative distribution of the source grayscale histogram; and
fusing the source grayscale histogram and the weighted grayscale histogram based on the cumulative distribution to obtain the target grayscale histogram.

16. The enhancement method for the infrared image of claim 4, wherein fusing the source grayscale histogram and the weighted grayscale histogram to obtain the target grayscale histogram comprises:
determining a cumulative distribution of the source grayscale histogram; and
fusing the source grayscale histogram and the weighted grayscale histogram based on the cumulative distribution to obtain the target grayscale histogram.

17. An enhancement apparatus for an infrared image, comprising:
an acquiring module configured for acquiring a source grayscale histogram of an infrared image to be processed,
a segmenting module configured for iteratively segmenting the source grayscale histogram based on distribution feature information of the source grayscale histogram to obtain a set of target sub-histograms;
a correction module configured for performing probability density correction on each target sub-grayscale histogram among the set of target sub-histograms to obtain a weighted grayscale histogram;
a fusing module configured for fusing the source grayscale histogram and the weighted grayscale histogram to obtain a target grayscale histogram; and
a mapping module configured for determining a grayscale mapping curve of the target grayscale histogram, and performing grayscale mapping on the infrared image to be processed based on the grayscale mapping curve to obtain a contrast-enhanced image of the infrared image to be processed.

18. The enhancement apparatus for an infrared image of claim 17, wherein the segmenting module comprises:
a first updating unit configured for, in case that a current number of iterations is 0, determining a set of initial sub-histograms to be processed as the source grayscale histogram, and determining a set of initial result sub-histograms as an empty set; wherein an initial value of the current number of iterations being 0; in case that the current number of iterations is greater than 0, updating the set of initial sub-histograms to be processed to a set of target sub-histograms to be processed obtained after a previous iteration for the current number of iterations, and updating the set of initial result sub-histograms to a set of target result sub-histograms obtained after the previous iteration;
a segmentation determining unit configured for determining, for each initial sub-histogram to be processed among the set of initial sub-histograms to be processed, whether the segmentation of the initial sub-histogram to be processed is required;
a first segmentation processing unit configured for moving, in case that the segmentation of the initial sub-histogram to be processed is required, the initial sub-histogram to be processed into a set of first sub-histograms to be processed;
a second segmentation processing unit configured for moving, in case that the segmentation of the initial sub-histogram to be processed is not required, the initial sub-histogram to be processed into a set of first result sub-histograms, wherein an initial state of the set of first result sub-histograms being the set of initial result sub-histograms;
a segmentation unit configured for, for each first sub-histogram to be processed among the set of first sub-histograms to be processed, segmenting the first sub-histogram to be processed based on distribution feature information of the first sub-histogram to be processed, and moving a segmented result into a set of second sub-histograms to be processed;
a second updating unit configured for after the set of initial sub-histograms to be processed is traversed, updating the set of target sub-histograms to be processed with the set of second sub-histograms to be processed obtained in a current round of iterations, updating the set of target result sub-histograms with the set of first result sub-histograms obtained in the current round of iterations, and incrementing the current number of iterations by 1; and
an iteration processing unit configured for determining whether iteration ends, determining a set of finally obtained target result sub-histograms as the set of target sub-histograms in case that the iteration ends and proceeding to a next iteration in case that the iteration does not end.

19. An electronic device comprising a memory, a processor, and a computer program stored on the memory and executable on the processor, wherein the computer program, when executed by the processor, performs the enhancement method for the infrared image of any of claims 1 to 16.

20. A computer-readable storage medium storing a computer program, wherein the computer program, when executed by a processor, performs the enhancement method for the infrared image of any of claims 1 to 16.
